# DEMANDE DE BREVET EUROPEEN

(11) **EP 1 796 245 A1**
(43) Date de publication de la demande: **13.06.2007**
(21) Numéro de dépôt: 06301211.6
(22) Date de dépôt: 04.12.2006
(51) Int. Cl.: H02K 7/102, H02K 21/22, B66D 5/08, F16D 49/18

(54) **Machine électrique tournante comportant un frein venant en prise avec deux surfaces de freinage opposées**

(30) Priorité: 09.12.2005 FR 0553824
(71) Demandeur: MOTEURS LEROY-SOMER, 16015 Angouleme Cédex (FR)
(72) Inventeur: Coupart, Eric, 16000, ANGOULEME (FR)
(74) Mandataire: Tanty, François

(57) **Abrégé**

La présente invention concerne une machine électrique tournante (1) comportant :
- un stator (2),
- un rotor (3) ayant un axe de rotation (X), comportant une paroi d'extrémité tubulaire définissant deux surfaces de freinage opposées,
- un frein électromagnétique (40) disposé de manière à s'appliquer en configuration de freinage simultanément sur les surfaces de freinage (61, 62) tournant avec le rotor.

## Description

La présente invention concerne une machine électrique tournante et plus particulièrement, mais non exclusivement, les machines à aimants permanents, destinées par exemple à l'entraînement des cabines d'ascenseur ou des treuils.

Il existe un besoin pour bénéficier de machines à la fois performantes et d'encombrement réduit afin de faciliter par exemple l'implantation des ascenseurs.

Il existe un besoin pour bénéficier d'une machine dont la fabrication soit relativement aisée et économique, de fonctionnement fiable et capable d'assurer éventuellement une fonction de parachute ascensionnel dans le cas de l'utilisation pour entraîner une cabine d'ascenseur.

La présente invention concerne, selon l'un de ses aspects, une machine électrique tournante comportant :
- un stator,
- un rotor ayant un axe de rotation, comportant une paroi d'extrémité tubulaire définissant deux surfaces de freinage opposées,
- un frein électromagnétique disposé de manière à s'appliquer simultanément, en configuration de freinage, sur les surfaces de freinage du rotor.

Avantageusement, les surfaces de freinage présentent un diamètre qui est égal à ou proche, par exemple à 20 % près, mieux à 10 % près, du plus grand diamètre du rotor.

Cela permet de bénéficier d'un couple de freinage relativement élevé.

Les surfaces de freinage qui s'étendent non entièrement perpendiculairement à l'axe de rotation peuvent être par exemple sensiblement cylindriques de révolution autour de l'axe de rotation.

Le rotor peut comporter des aimants permanents.

Le freinage sur deux surfaces de freinage opposées tournant avec le rotor permet, lorsque ces surfaces sont définies par une paroi tubulaire du rotor sur laquelle sont fixés des aimants, de ne pas ovaliser cette paroi et ainsi de ne pas endommager le rotor. Lorsque les aimants sont collés sur la paroi précitée, le risque de décollement des aimants est réduit.

Le rotor peut être extérieur.

Le rotor peut définir au moins une surface d'entraînement pour entraîner au moins un câble. La surface d'entraînement est définie par une portion d'entraînement du rotor.

La portion d'entraînement peut être pourvue, dans un exemple de mise en oeuvre de l'invention, d'au moins une gorge annulaire pour l'entraînement d'au moins un câble. En variante, la portion d'entraînement peut être destinée à recevoir une poulie.

Le terme « câble » ne doit pas être compris avec un sens limitatif et englobe des fils de toutes sections et structures, par exemple composites.

Le cas échéant, la portion d'entraînement peut ne comporter qu'une seule gorge et ne recevoir qu'un seul câble.

L'entraînement de la portion d'entraînement s'effectue sans engrenage, ce qui accroît la fiabilité et peut réduire le bruit de fonctionnement, simplifier la fabrication et diminuer l'encombrement.

La machine peut être agencée pour assurer une transmission de couple entre la surface d'entraînement et la ou les surfaces de freinage grâce à une pièce monobloc ou grâce à plusieurs pièces mais sans reprise de couple obtenue par un assemblage mécanique autre qu'un soudage des pièces.

La transmission de couple est ainsi avantageusement assurée par une même pièce monobloc du rotor.

Le rotor peut comporter une portion d'extrémité définissant les deux surfaces de freinage opposées, qui peuvent être cylindriques de révolution autour de l'axe de rotation.

Le stator peut être à bobinage concentré. En variante, le bobinage du stator pourrait être distribué.

Le rotor peut être dépourvu de tôles magnétiques.

Le stator peut comporter une paroi de support intérieure, par exemple de forme tubulaire, s'étendant au moins partiellement entre les enroulements du stator et un arbre du rotor.

La machine peut comporter un codeur à l'intérieur de la paroi de support précitée.

La machine peut comporter deux freins électromagnétiques ou plus, les freins étant par exemple diamétralement opposés.

Le ou les freins peuvent comporter chacun deux garnitures de freinage pouvant s'appliquer sur les surfaces de freinage, chaque garniture de freinage étant avantageusement galbée de forme adaptée à la courbure de la surface de freinage correspondante.

Le ou les freins peuvent comporter chacun une mâchoire coulissant sur au moins une tige de guidage.

La ou les mâchoires peuvent coulisser chacune sur au moins deux tiges de guidage parallèles.

La ou les tiges de guidage peuvent s'étendre sensiblement parallèlement à un plan perpendiculaire à l'axe de rotation et peuvent être orientées sensiblement horizontalement.

Le ou chaque frein peut comporter une bobine d'électroaimant positionnée radialement à l'intérieur de la ou des surfaces de freinage, ce qui peut contribuer à réduire l'encombrement de la machine.

L'invention a encore pour objet, selon l'un de ses aspects, un procédé d'entraînement d'une cabine d'ascenseur, comportant l'utilisation d'une machine électrique telle que définie plus haut pour entraîner au moins un câble relié à la cabine.

L'invention a encore pour objet, selon un autre de ses aspects, un frein électromagnétique comportant deux garnitures de freinage opposées ayant chacune une face de freinage non plane, par exemple cylindrique.

Ces deux garnitures opposées sont destinées par exemple à enserrer une paroi cylindrique de révolution, en configuration de freinage.

Le frein peut comporter deux mâchoires portant les garnitures et coulissant sur deux tiges de guidage parallèles.

L'invention a encore pour objet, selon un autre de ses aspects, indépendamment ou en combinaison avec ce qui précède, une machine électrique comportant :
- un rotor extérieur comportant un arbre et définissant une surface d'entraînement d'au moins un câble,
- au moins un frein, et
- un stator comportant des enroulements situés axialement entre le frein et la surface d'entraînement.

Une telle disposition du ou des freins facilite la réalisation d'une machine de faible encombrement.

L'invention pourra être mieux comprise à la lecture de la description détaillée qui va suivre, d'exemples de mise en oeuvre non limitatifs de celle-ci, et à l'examen du dessin annexé, sur lequel :

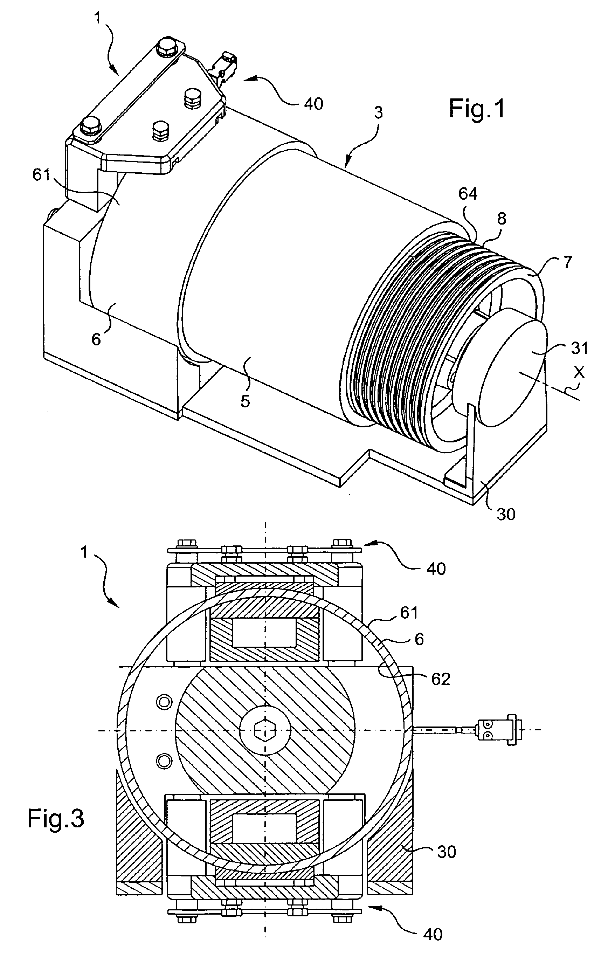

- la figure 1 représente en perspective un exemple de machine réalisée conformément à l'invention,
- la figure 2 est une coupe longitudinale schématique de la machine de la figure 1,

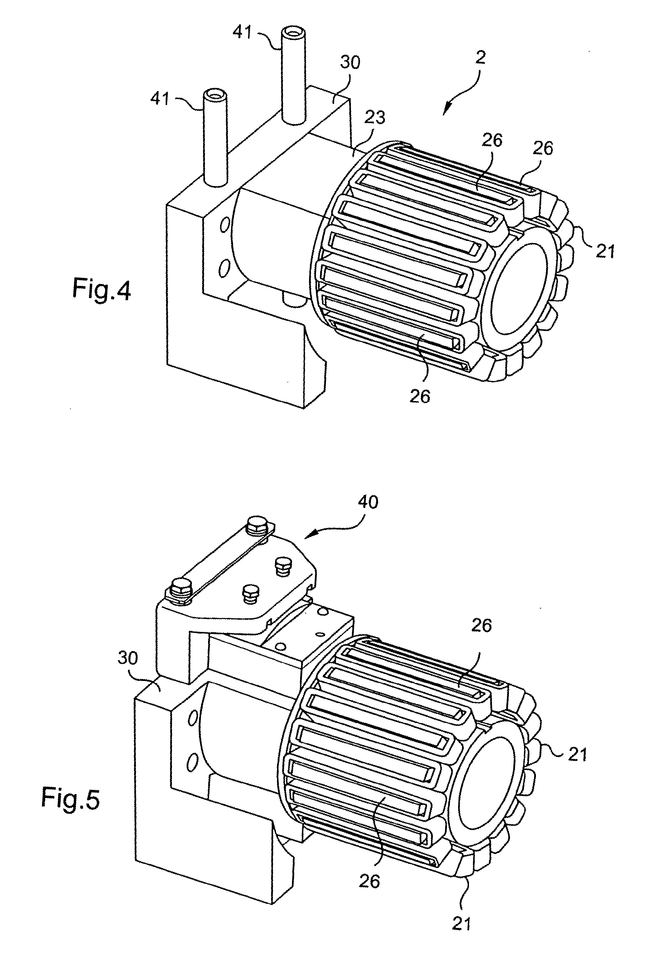

- la figure 3 est une coupe transversale selon III-III de la figure 2,
- la figure 4 représente de manière schématique et partielle le stator et le châssis de la machine,
- la figure 5 est une vue analogue à la figure 4 après montage d'un frein,
- la figure 6 est une vue analogue à la figure 4 sans les tiges de guidage ni le circuit magnétique du stator,
- la figure 7 représente isolément en perspective, de manière schématique et partielle, un frein,
- la figure 8 est une coupe axiale, schématique et partielle, d'un autre exemple de machine réalisée conformément à l'invention,
- la figure 9 représente isolément, en perspective, un exemple de frein selon une variante,
- la figure 10 est une coupe du frein de la figure 9, selon X-X de la figure 11, et
- la figure 11 est une coupe selon XI-XI de la figure 10.

La machine électrique 1 représentée sur les figures comporte un stator 2 et un rotor 3 pouvant tourner autour d'un axe géométrique de rotation X.

Dans l'exemple considéré, le stator 2 est à bobinage concentré, comportant des dents 26 et sur chacune de celles-ci une bobine individuelle 21.

Le rotor 3 comporte des aimants permanents 60 disposés de façon à interagir magnétiquement avec le stator.

Les aimants 60 sont disposés sur la surface radialement intérieure d'une paroi tubulaire 5 du rotor, ayant à une extrémité une portion 6 définissant deux surfaces de freinage 61 et 62 respectivement radialement extérieure et radialement intérieure.

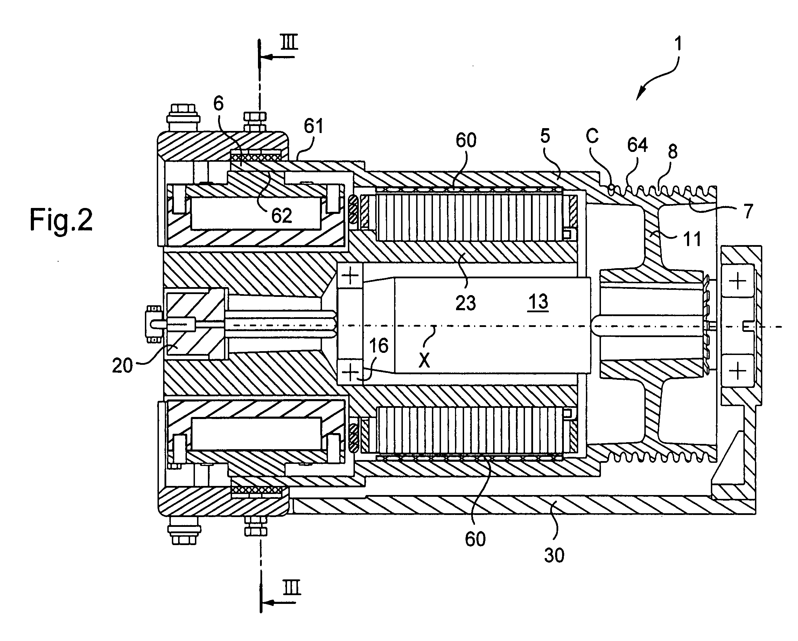

La paroi 5 comporte à l'autre extrémité une portion d'entraînement 7 définissant une surface d'entraînement 64 qui est pourvue dans l'exemple considéré d'une pluralité de gorges 8 destinées à recevoir chacune un câble C dont l'un seulement a été représenté en section sur la figure 2, dans un souci de clarté du dessin.

Dans l'exemple illustré, la paroi tubulaire 5 est réalisée d'une seule pièce avec les surfaces de freinage 61, 62 et d'entraînement 64, par exemple par moulage de matière et/ou par usinage, mais dans une variante non illustrée la portion d'entraînement 7 peut être réalisée dans une première pièce et la portion d'extrémité 6 dans une autre pièce, reliée à la première de préférence par soudure.

La portion d'entraînement 7 se raccorde dans l'exemple considéré à un moyeu 10 par une paroi transversale 11, celle-ci étant éventuellement ajourée de façon à créer une circulation d'air.

Le moyeu 10 est fixé sur un arbre 13 du rotor par l'intermédiaire par exemple d'une liaison à au moins une clavette.

L'arbre 13 reposé à ses extrémités sur des roulements 16 et 17.

La machine 1 comporte dans l'exemple illustré un codeur 20 pour détecter la rotation de l'arbre 13.

Les dents 26 du stator se raccordent à une culasse qui est portée par une paroi de support intérieure 23 du stator, de forme tubulaire d'axe X.

Cette paroi de support 23 s'étend en éloignement du moyeu 10 au-delà des bobines 21 pour se raccorder à un châssis 30 de la machine 1.

Le roulement 16 est supporté par la paroi de support 23 et le roulement 17 par un montant 31 du châssis 30 à une extrémité de la machine.

Dans l'exemple considéré, la machine 1 comporte, du côté opposé au roulement 17, au moins un frein électromagnétique 40, en l'espèce deux freins 40 diamétralement opposés et disposés de manière à s'appliquer chacun sur les surfaces de freinage 61 et 62 en configuration de freinage.

Chaque frein 40 est monté sur deux tiges de guidage 41, fixes relativement au châssis 30, et dont les axes sont, dans l'exemple considéré, contenus dans un plan perpendiculaire à l'axe de rotation X et orientés par exemple horizontalement lorsque la machine est installée. Lorsque les tiges de guidage 41 sont non horizontales, les freins peuvent comporter des ressorts de compensation du poids des mâchoires notamment.

Chaque frein 40 comporte une bobine d'électroaimant non apparente et deux mâchoires qui sont sollicitées en rapprochement l'une de l'autre en l'absence d'excitation de la bobine d'électroaimant par un ou plusieurs ressorts de rappel non apparents.

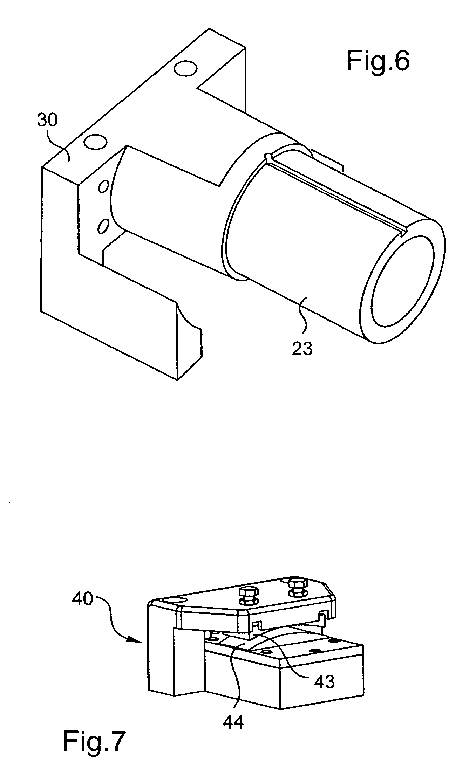

Les mâchoires portent des garnitures respectives 43 et 44, que l'on peut voir sur la figure 7 notamment, qui sont agencées pour s'appliquer respectivement sur les surfaces de freinage 61 et 62.

Lorsque la bobine d'électroaimant est alimentée électriquement, le frein n'est pas en configuration de freinage et la portion d'extrémité 6 peut tourner librement.

Lorsque la bobine d'électroaimant cesse d'être alimentée électriquement, les garnitures 43 et 44 s'appliquent contre les surfaces de freinage 61 et 62.

Les garnitures 43 et 44 sont galbées de façon à épouser la forme de la surface de freinage correspondante en regard.

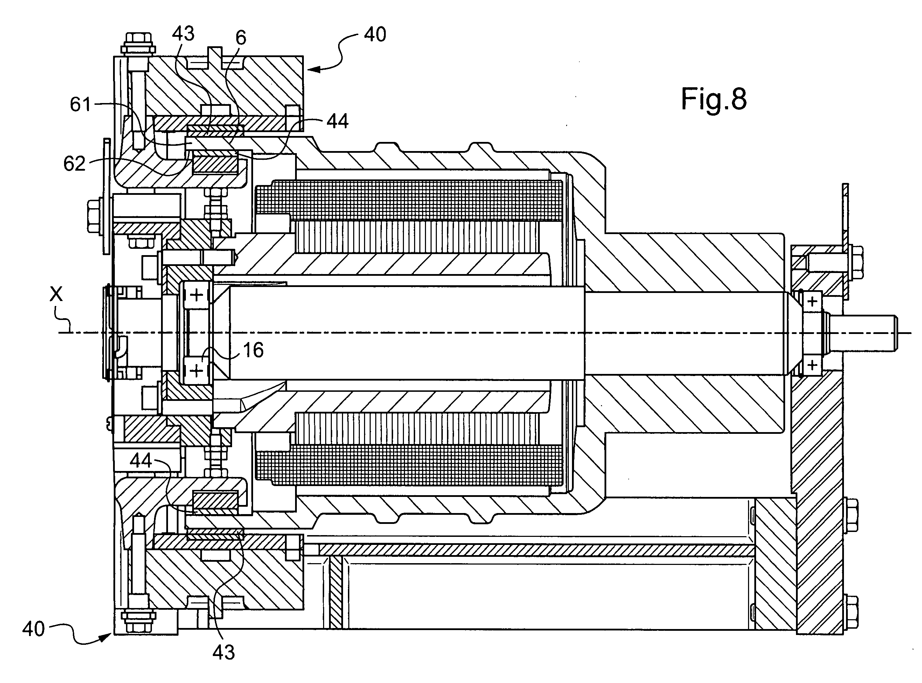

La figure 8 est une coupe axiale, schématique et partielle, d'un autre exemple de machine selon l'invention. Les mêmes signes de référence ont été utilisés pour désigner des éléments identiques ou similaires à ceux de la machine représentée à la figure 2.

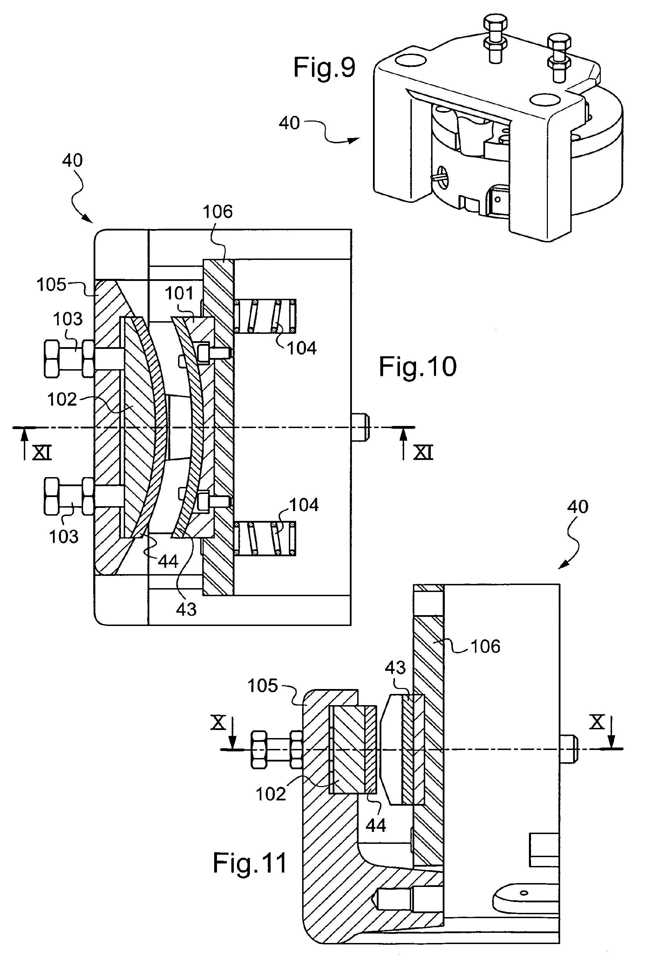

On a représenté isolément aux figures 9 à 11 l'un des deux freins 40 équipant cette machine. On peut voir sur ces figures que les garnitures 43 et 44 sont respectivement portées par des supports 101 et 102. Le support 102 permet un réglage du jeu grâce à des vis 103 venant en prise avec la mâchoire correspondante. Des ressorts de rappel 104 sont prévus pour rappeler les mâchoires 105 et 106 en rapprochement l'une de l'autre en l'absence d'excitation de la ou des bobines d'électroaimant.

L'invention n'est pas limitée aux exemples de réalisation qui viennent d'être décrits.

Dans l'exemple illustré, les bobines du stator sont disposées axialement entre les surfaces de freinage et la surface d'entraînement.

Dans une variante de réalisation non illustrée, les surfaces de freinage et d'entraînement sont situées d'un même côté des bobines du stator, la surface d'entraînement étant par exemple disposée entre les bobines du stator et les surfaces de freinage.

Les surfaces de freinage peuvent être autres que cylindriques, par exemple coniques, bi-coniques ou tronconiques, d'axe confondu avec l'axe de rotation.

Dans une autre variante non illustrée, la machine comporte à la fois au moins un frein d'un côté des bobines du stator et un autre frein de l'autre côté de ces bobines du stator, du côté de la portion d'entraînement 7.

L'invention s'applique également à une machine avec un rotor intérieur, la surface de freinage étant par exemple dans ce cas définie par un prolongement de la paroi tubulaire 5 adjacente à la portion d'entraînement 7.

La machine peut comporter un seul frein ou plus de deux freins.

Dans les exemples illustrés, les freins comportent une bobine d'électroaimant, mais on ne sort pas du cadre de la présente invention lorsque la machine comporte un frein qui comporte par exemple plus d'une bobine d'électroaimant, chacune étant par exemple associée à une seule garniture de freinage. Au repos, les garnitures de freinage associées à chaque bobine peuvent s'appliquer sur des surfaces de freinage opposées et lorsque les bobines sont alimentées électriquement, les garnitures de freinage correspondantes s'écartent des surfaces de freinage.

L'expression « comportant un » doit être comprise comme étant synonyme de « comportant au moins un » sauf si le contraire est spécifié.

## Revendications

1. Machine électrique tournante (1) comportant :
- un stator (2),
- un rotor (3) ayant un axe de rotation (X), comportant une paroi d'extrémité tubulaire définissant deux surfaces de freinage opposées,
- un frein électromagnétique (40) disposé de manière à s'appliquer en configuration de freinage simultanément sur les surfaces de freinage (61, 62) tournant avec le rotor.

2. Machine selon la revendication 1, les surfaces de freinage (61, 62) étant cylindriques de révolution autour de l'axe de rotation.

3. Machine selon l'une des revendications 1 et 2, le rotor comportant des aimants permanents (60).

4. Machine selon l'une quelconque des revendications 1 à 3, le rotor (3) étant extérieur.

5. Machine selon l'une quelconque des revendications précédentes, le rotor (3) définissant au moins une surface d'entraînement (64) pour entraîner au moins un câble (C).

6. Machine selon la revendication précédente, la surface d'entraînement (64) comportant au moins une gorge annulaire (8).

7. Machine selon la revendication 6, la surface d'entraînement comportant une pluralité de gorges annulaires (8).

8. Machine selon l'une quelconque des revendications 5 à 7, agencée pour assurer une transmission de couple entre la surface d'entraînement (64) et les surfaces de freinage (61, 62) grâce à une pièce monobloc ou grâce à plusieurs pièces mais sans reprise de couple par un assemblage mécanique autre qu'un soudage des pièces.

9. Machine selon la revendication 8, la transmission de couple étant assurée par une même pièce monobloc du rotor (3).

10. Machine selon l'une quelconque des revendications précédentes, le stator étant à bobinage concentré.

11. Machine selon l'une quelconque des revendications précédentes, le stator comportant une paroi de support (23) s'étendant au moins partiellement entre les bobinages (21) du stator et un arbre (13) du rotor.

12. Machine selon la revendication précédente, comportant un codeur (20) disposé à l'intérieur de la paroi de support (23).

13. Machine selon l'une quelconque des revendications précédentes, comportant deux freins électromagnétiques (40).

14. Machine selon la revendication précédente, les freins (40) étant diamétralement opposés.

15. Machine selon l'une quelconque des revendications précédentes, le ou les freins comportant chacun deux garnitures de freinage (43, 44) aptes à s'appliquer sur les surfaces de freinage (61, 62).

16. Machine selon la revendication précédente, chaque garniture de freinage (43, 44) étant galbée de forme adaptée à la courbure de la surface de freinage correspondante.

17. Machine selon l'une quelconque des revendications précédentes, le ou les freins (40) comportant chacun au moins une mâchoire coulissant sur au moins une tige de guidage (41).

18. Machine selon la revendication 17, la ou les mâchoires coulissant chacune sur au moins deux tiges de guidage parallèles (41).

19. Machine selon la revendication 17 ou 18, la ou les tiges de guidage (41) s'étendant sensiblement parallèlement à un plan perpendiculaire à l'axe de rotation (X).

20. Machine selon l'une quelconque des revendications 17 à 19, la ou les tiges de guidage (41) s'étendant sensiblement horizontalement.

21. Machine selon l'une quelconque des revendications précédentes, le ou les freins (40) comportant une bobine d'électroaimant positionnée radialement à l'intérieur des surfaces de freinage (61, 62).

22. Machine selon l'une quelconque des revendications précédentes, le ou les freins comportant chacun des vis de réglage de l'écartement de garnitures de freinage des surfaces de freinage, en l'absence de freinage.

23. Procédé d'entraînement d'une cabine d'ascenseur, comportant l'utilisation d'une machine électrique telle que définie dans l'une quelconque des revendications précédentes pour entraîner au moins un câble relié à la cabine.

24. Frein électromagnétique destiné à équiper une machine telle que définie dans l'une quelconque des revendications 1 à 22, comportant deux garnitures de freinage mobiles et présentant chacune une face de freinage non plane, notamment cylindrique.
